# EUROPEAN PATENT APPLICATION

(11) **EP 4 398 002 A1**
(43) Date of publication of application: **10.07.2024**
(21) Application number: 23220653.2
(22) Date of filing: 28.12.2023
(51) Int. Cl.: G01W 1/02, B64G 1/46

(54) **STAY CONNECTED (STAY-C) ENVIRONMENTAL CHARACTERIZATION SYSTEM**

(30) Priority: 04.01.2023 US 202318149937
(71) Applicant: Hamilton Sundstrand Space Systems International, Inc., Windsor Locks, CT 06096-1010 (US)
(72) Inventor: TODD, Joshua, Tolland, 06084 (US); FLETCHER, Gabriel, Colchester, 06415 (US)
(74) Representative: Dehns

(57) **Abstract**

A deployable unit of a stay connected (STAY-C) environmental characterization system is provided. The deployable unit includes a body (110), a telescoping mounting spike (120) that normally assumes a retracted position and selectively assumes an extended position at which the telescoping mounting spike (120) is insertable into a surface for mounting the body (110), internal circuitry (210) configured to characterize local environmental conditions, a power source configured to power the internal circuitry (210) and first and second actuatable elements supported on the body (110). The first actuatable element is actuatable to cause the telescoping mounting spike (120) to assume the extended position. The second actuatable element is actuatable to activate the internal circuitry (210).

## Description

### BACKGROUND

The present disclosure relates to an environmental characterization system and, in particular, to a stay connected (STAY-C) environmental characterization system that remains connected.

It is often necessary to characterize an environment. Devices that do so can include various sensors and can incorporate radiation hardened and purposefully deployed radiation sensitive components. While such devices are commonly used on earth, there is no device or system of devices that can be continually deployed on non-terrestrial bodies, such as the Martian landscape. As such, there is no consistent, local environmental monitoring for non-terrestrial surface characterization. Certainly, none exists that is also capable of interfacing with an extra-vehicular activity (EVA) suit.

### SUMMARY

According to an aspect of the disclosure, a deployable unit of a stay connected (STAY-C) environmental characterization system is provided. The deployable unit includes a body, a telescoping mounting spike that normally assumes a retracted position and selectively assumes an extended position at which the telescoping mounting spike is insertable into a surface for mounting the body, internal circuitry configured to characterize local environmental conditions, a power source configured to power the internal circuitry and first and second actuatable elements supported on the body. The first actuatable element is actuatable to cause the telescoping mounting spike to assume the extended position. The second actuatable element is actuatable to activate the internal circuitry.

In accordance with additional or alternative embodiments, the deployable unit further includes a screen on which a user interface (UI) is displayable by the internal circuitry to convey details of an operational mode of the deployable unit and the local environmental conditions.

In accordance with additional or alternative embodiments, the power source includes a battery and the deployable unit further includes a charging port by which the battery is chargeable.

In accordance with additional or alternative embodiments, the deployable unit further includes a photovoltaic (PV) panel attachable to the body and operable as the power source.

In accordance with additional or alternative embodiments, the deployable unit further includes a mounting element by which the body is mountable to an extra-vehicular activity (EVA) suit.

In accordance with additional or alternative embodiments, the internal circuitry characterizes the local environmental conditions by extrapolating weather and radiation patterns.

In accordance with additional or alternative embodiments, the internal circuitry includes a field programmable gate array (FPGA) and sensors configured to collect data for characterizing the local environmental conditions.

In accordance with additional or alternative embodiments, the sensors include a humidity sensor, a temperature sensor, a dosimeter and a single event upset (SEU) monitor.

In accordance with additional or alternative embodiments, the internal circuitry further includes master/slave units disposed in signal communication with the FPGA and the master/slave units are communicative with master/slave units of other deployable units to determine whether the deployable unit is a hub or chained and to receive/transmit data accordingly.

According to an aspect of the disclosure, a deployable unit net of a stay connected (STAY-C) environmental characterization system is provided. The deployable unit net includes deployable units, which are deployable at locations of a surface, and each being a hub or chained. Each deployable unit includes a body, a telescoping mounting spike that normally assumes a retracted position and selectively assumes an extended position at which the telescoping mounting spike is insertable into a surface for mounting the body, internal circuitry configured to characterize local environmental conditions, to self-determine a status as a master or slave and to communicate with internal circuitry of the other deployable units accordingly, a power source configured to power the internal circuitry and first and second actuatable elements supported on the body. The first actuatable element is actuatable to cause the telescoping mounting spike to assume the extended position. The second actuatable element is actuatable to activate the internal circuitry.

In accordance with additional or alternative embodiments, each deployable unit further includes a screen on which a user interface (UI) is displayable by the internal circuitry to convey details of an operational mode of the deployable unit and the local environmental conditions.

In accordance with additional or alternative embodiments, the power source of each deployable unit further includes a battery and each of the deployable units further includes a charging port by which the battery is chargeable.

In accordance with additional or alternative embodiments, each deployable unit further includes a photovoltaic (PV) panel attachable to the body and operable as the power source.

In accordance with additional or alternative embodiments, each deployable unit further includes a mounting element by which the body is mountable to an extra-vehicular activity (EVA) suit.

In accordance with additional or alternative embodiments, the internal circuitry of each deployable unit characterizes the local environmental conditions by extrapolating weather and radiation patterns.

In accordance with additional or alternative embodiments, the internal circuitry of each deployable unit includes a field programmable gate array (FPGA) and sensors configured to collect data for characterizing the local environmental conditions.

In accordance with additional or alternative embodiments, the sensors include a humidity sensor, a temperature sensor, a dosimeter and a single event upset (SEU) monitor.

In accordance with additional or alternative embodiments, the internal circuitry further includes master/slave units disposed in signal communication with the FPGA and the master/slave units are communicative with master/slave units of other deployable units to determine whether the deployable unit is a hub or chained and to receive/transmit data accordingly.

According to an aspect of the disclosure, a method operating a net of deployable units of a stay connected (STAY-C) environmental characterization system is provided. Each deployable unit includes internal circuitry configured to characterize local environmental conditions, to self-determine a status as a master or slave and to communicate with internal circuitry of the other deployable units accordingly. The method includes deploying the deployable units at locations of a surface, each deployable unit being a hub or chained, executing a system integrity check for each of the deployable units, initiating a sleep mode of each of the deployable units, waking each of the deployable units whereupon the internal circuitry self-determines a status as a master or a slave, engaging the internal circuitry of each deployable unit to characterize the local environmental conditions and receiving/transmitting data of the local environmental conditions according to the master or the slave status.

In accordance with additional or alternative embodiments, the internal circuitry of each deployable unit characterizes the local environmental conditions by extrapolating weather and radiation patterns.

Additional features and advantages are realized through the techniques of the present disclosure. Other embodiments and aspects of the disclosure are described in detail herein and are considered a part of the claimed technical concept. For a better understanding of the disclosure with the advantages and the features, refer to the description and to the drawings.

### BRIEF DESCRIPTION OF THE SEVERAL VIEWS OF THE DRAWINGS

For a more complete understanding of this disclosure, reference is now made to the following brief description, taken in connection with the accompanying drawings and detailed description, wherein like reference numerals represent like parts:
FIGS. 1A and 1B are orthogonal perspective views of a deployable unit in accordance with embodiments;
FIG. 2 is a schematic diagram of internal circuitry of the deployable unit of FIG. 1 in accordance with embodiments;
FIG. 3 is a graphical illustration of a net of deployable units being formed by an astronaut in accordance with embodiments; and
FIG. 4 is a flow diagram illustrating a method of operating a net of deployable units in accordance with embodiments.

### DETAILED DESCRIPTION

A significant time delay exists between Houston and an astronaut performing an EVA on the Martian landscape. This delay, up to 40 minutes for a call- and-response between the Earth and Mars, often impedes critical communication should an issue arise. In particular, the delay can result in a lack of monitoring of sudden abnormal environmental conditions that could lead to loss of crew or loss of assets during a long-duration surface EVA. At this time, there is no consistent, local environmental monitoring for surface characterization especially for a non-terrestrial surface, such as the Martian landscape. There is certainly no device in existence that can be continually deployed on non-terrestrial bodies and that incorporates both radiation hardened and purposefully deployed radiation sensitive components.

Thus, as will be described below, a deployable mobile unit of a stay connected (STAY-C) environmental characterization system is provided and is powered by a solar panel and a backup battery and will incorporate one or more of temperature, pressure, humidity and radiation sensors to be able to locally characterize a non-terrestrial surface, such as the lunar landscape or the Martian landscape. Each of the deployable mobile units will be able to self-identify where they are in their communication chain and, over time, develop a surface map to be able to detect and predict adverse and dangerous environmental effects, such as storms or temperature drops/spikes. The artificial intelligence algorithm will also characterize total ionizing radiation and single-event effects over time, providing data to inform future permanent or semi-permanent structures with a higher degree of confidence.

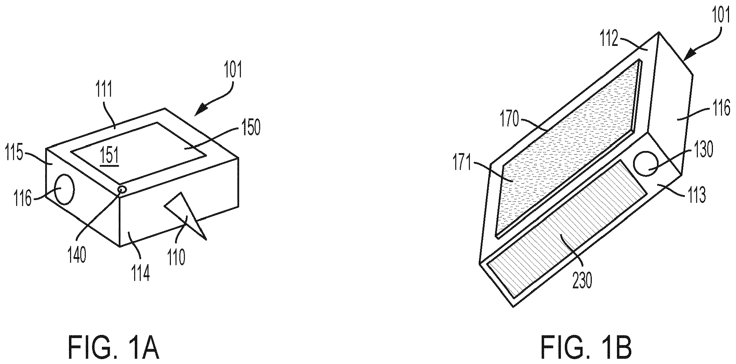

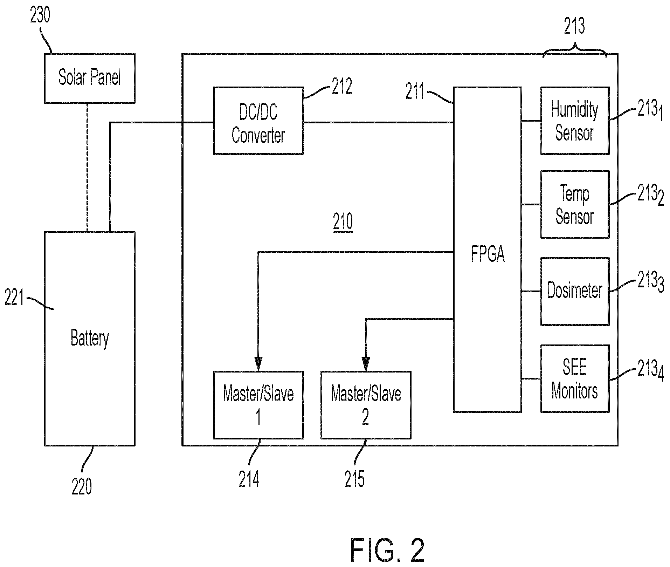

With reference to FIGS. 1A and 1B and to FIG. 2, a deployable unit 101 of a STAY-C environmental characterization system is provided and includes a body 110, a telescoping mounting spike 120, internal circuitry 210 (see FIG. 2), a power source 220 (see FIG. 2), a first actuatable element 130 and a second actuatable element 140. The body 110 can be a volumetric body with opposed major surfaces 111 and 112, opposed minor upper and lower surfaces 113 and 114 and opposed minor side surfaces 115 and 116. The telescoping mounting spike 120 can be supported at the minor lower surface 114 and normally assumes a retracted position but can selectively assume an extended position at which the telescoping mounting spike 120 is insertable into a surface (i.e., a non-terrestrial surface, such as the lunar surface or the Martian surface) for mounting the body 110. The internal circuitry 210 is configured to characterize local environmental conditions and will be described in greater detail below. The power source 220 is configured to power the internal circuitry 210 and will also be described in greater detail below. The first actuatable element 130 can be provided as a button and is supported on the body 110. The first actuatable element 130 is actuatable to cause the telescoping mounting spike 120 to assume the extended position. The second actuatable element 140 can be provided as a button or a set of buttons. The second actuatable element 140 is supported on the body 110 and is actuatable to activate the internal circuitry 210.

In accordance with embodiments, the body 110 can be formed of radiation hardened material or can otherwise be configured to protect the internal circuitry 210 from radiation. In an exemplary case, the body 110 can be lined with lead or another suitable material.

In accordance with embodiments, the deployable unit 101 can further include a screen 150 on which a user interface (UI) 151 is displayable by the internal circuitry to convey details of an operational mode of the deployable unit 101 and the local environmental conditions. Also, the power source 220 can include or be provided as a battery 221 (see FIG. 2) and, in these or other cases, the deployable unit 101 can further include a charging port 160 by which the battery 221 is chargeable. In some cases, the deployable unit 101 can include a photovoltaic (PV) panel 230 attachable to the body 110 (i.e., the minor upper surface 113) and can be operable as the power source 220.

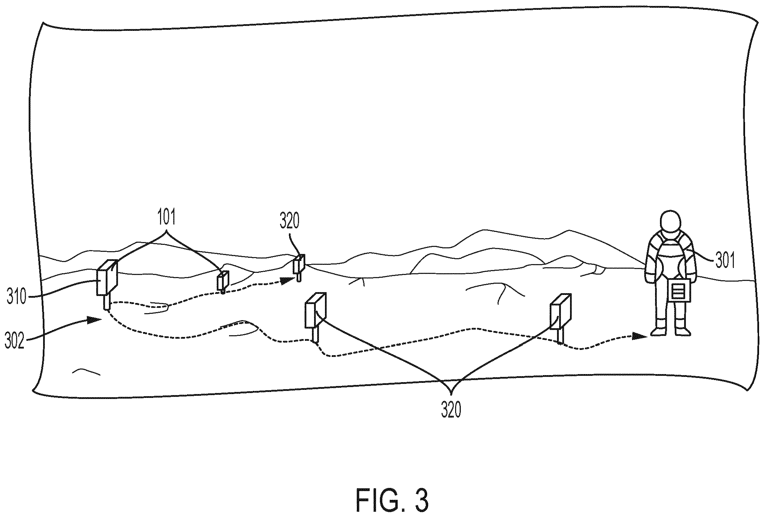

With continued reference to FIG. 1 and with additional reference to FIG. 3 and in accordance with still other embodiments, the deployable unit 101 can include a mounting element 170 by which the body 110 is mountable to an extra-vehicular activity (EVA) suit 301. The mounting element 170 can include or be provided as a bracket covered with Velcro ^{™} 171. In these or other cases, astronauts wearing the EVA suits can have multiple deployable units 101 attached to their respective suits during an EVA. As each astronaut walks from location to location, he/she can deploy a deployable unit 101 at a given location by pulling it off his/her EVA suit 301, actuating the first actuatable element 130 and sticking the telescoping mounting spike 120 into the surface and subsequently actuating the second actuatable element 140 to activate the internal circuitry 210. In this way, the astronauts can form a net 302 of the STAY-C environmental characterization system where the net 302 is formed of the deployable units 101 that are intercommunicative with one another as will be described below.

With reference back to FIG. 2, the internal circuitry 210 is configured to characterize the local environmental conditions by extrapolating weather and radiation patterns. To this end, the internal circuitry 210 can include a field programmable gate array (FPGA) 211, which receives power from the power source 220 via a DC/DC converter 212, and sensors 213 that are configured to collect data for characterizing the local environmental conditions. The sensors 213 can include a humidity sensor 2131 for sensing local humidity around the deployable unit 101, a temperature sensor 2132 for sensing local temperatures around the deployable unit 101, a dosimeter 2133 for sensing local radiation levels around the deployable unit 101 and a single event upset (SEU) monitor 2134 for sensing amounts of radiation the deployable unit 101 is currently exposed to such as when a single charged particle impacts the deployable unit 101 with the potential for damaging the internal circuitry 210. The internal circuitry 210 can further include master/slave units 214, 215 that are disposed in signal communication with the FPGA 211. The master/slave units 214, 215 are communicative with master/slave units of other deployable units to determine whether the deployable unit 101 is a hub or chained and to receive/transmit data accordingly.

With the internal circuitry 210 provided as described above, the deployable unit 101 can be deployed as part of the net 302 as shown in FIG. 3. This net 302 includes a deployable unit 101 acting as a hub 310 and deployable units 101 acting as chained deployable units 320. In this case, each deployable unit 101 in the net 302 is capable of self-determining its own status as the hub 310 or as one of the chained deployable units 320, with the deployable unit 101 acting as the hub 310 being receptive of data from the chained deployable units 320 and the each of the chained deployable units 320 being receptive of data from distal chained deployable units 320 and capable of transmitting data to interior chained deployable units 320 or the hub 310.

With the hub 310 generating its own data and effectively being receptive of all the data from all the chained deployable units 320 in the net 302, human operators can interact with the hub 310 (or any of the chained deployable units 320) locally or remotely to review the data. This data can include local humidity data of each humidity sensor 2131, local temperature data from each temperature sensor 2132, and local radiation data from each dosimeter 2133 and from each SEU monitor 2134 and can be used to make informed decisions about how to build a base of operations, how and where to execute EVAs and other important decisions.

In an exemplary case, in an event that one or more of the chained deployable units 320 in the net 302 report(s) an unusually high level of radiation that remains at the unusually high level, the human operators can decide not to build a base of operations anywhere near those chained deployable units 320. Similarly, in an event that one or more of the chained deployable units 320 in the net 302 report an unusually high level of radiation only at periodic intervals, the human operators can decide not to build a base of operations anywhere near those chained deployable units 320 but may decide that EVAs can be scheduled near those chained deployable units 320 during low radiation times.

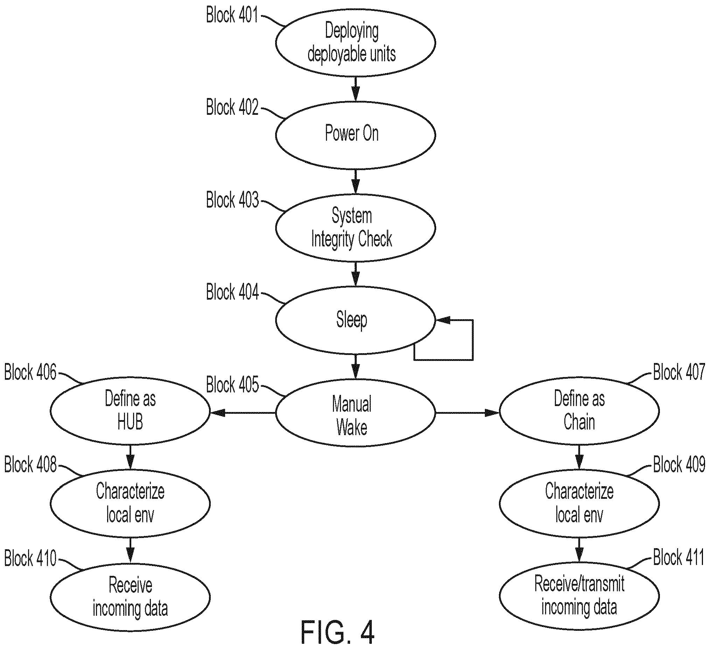

With reference to FIG. 4, a method operating a net of deployable units, such as the net 302 of FIG. 3, is provided. As shown in FIG. 4, the method includes deploying the deployable units at locations of a surface, with each deployable unit being a hub or chained (block 401) and activating each of the deployable units (block 402). The method also includes executing a system integrity check for each of the deployable units (block 403), initiating a sleep mode of each of the deployable units (block 404) and waking each of the deployable units (block 405) whereupon the internal circuitry self-determines a status as a master or a hub or a status as a slave or a chained deployable unit (blocks 406, 407). Subsequently, the internal circuitry of each deployable unit is engaged to characterize the local environmental conditions by, e.g., extrapolating weather and radiation patterns (blocks 408, 409) and each deployable unit receives/transmits data of the local environmental conditions according to the master or the slave status (blocks 410, 411).

Technical effects and benefits of the present disclosure are the provision of deployable mobile units that will be able to cooperatively characterize environmental and radiation environments locally. Over time, the units will inform NASA and future space programs of low-risk areas where semi-permanent or permanent structures should be strategically placed to avoid the most amount of life-time wear and damage. By implementing an artificial intelligence algorithm to characterize radiation events on the surface of the moon and Mars, both astronaut health and reliability of electronic functionality will be improved or guaranteed.

The corresponding structures, materials, acts, and equivalents of all means or step-plus function elements in the claims below are intended to include any structure, material, or act for performing the function in combination with other claimed elements as specifically claimed. The description of the present disclosure has been presented for purposes of illustration and description, but is not intended to be exhaustive or limited to the technical concepts in the form disclosed. Many modifications and variations will be apparent to those of ordinary skill in the art without departing from the scope and spirit of the disclosure. The embodiments were chosen and described in order to best explain the principles of the disclosure and the practical application, and to enable others of ordinary skill in the art to understand the disclosure for various embodiments with various modifications as are suited to the particular use contemplated.

While the preferred embodiments to the disclosure have been described, it will be understood that those skilled in the art, both now and in the future, may make various improvements and enhancements which fall within the scope of the claims which follow. These claims should be construed to maintain the proper protection for the disclosure first described.

## Claims

1. A deployable unit of BOa stay connected "STAY-C" environmental characterization system, the deployable unit comprising:
a body (110);
a telescoping mounting spike (120) that normally assumes a retracted position and selectively assumes an extended position at which the telescoping mounting spike (120) is insertable into a surface for mounting the body (110);
internal circuitry (210) configured to characterize local environmental conditions;
a power source configured to power the internal circuitry (210); and
first and second actuatable elements supported on the body (110), the first actuatable element being actuatable to cause the telescoping mounting spike (120) to assume the extended position and the second actuatable element being actuatable to activate the internal circuitry (210).

2. The deployable unit according to claim 1, further comprising a screen on which a user interface "UI" is displayable by the internal circuitry (210) to convey details of an operational mode of the deployable unit and the local environmental conditions.

3. The deployable unit according to any preceding claim, wherein the power source comprises a battery and the deployable unit further comprises a charging port by which the battery is chargeable.

4. The deployable unit according to any preceding claim, further comprising a photovoltaic "PV" panel attachable to the body (110) and operable as the power source, or further comprising a mounting element by which the body (110) is mountable to an extra-vehicular activity "EVA" suit.

5. The deployable unit according to any preceding claim, wherein the internal circuitry (210) characterizes the local environmental conditions by extrapolating weather and radiation patterns.

6. The deployable unit according to any preceding claim, wherein the internal circuitry (210) comprises:
a field programmable gate array "FPGA"; and
sensors configured to collect data for characterizing the local environmental conditions.

7. The deployable unit according to claim 6, wherein the sensors comprise a humidity sensor, a temperature sensor, a dosimeter and a single event upset "SEU" monitor; or wherein:
the internal circuitry (210) further comprises master/slave units disposed in signal communication with the FPGA, and
the master/slave units are communicative with master/slave units of other deployable units to determine whether the deployable unit is a hub or chained and to receive/transmit data accordingly.

8. A deployable unit net of a stay connected "STAY-C" environmental characterization system, the deployable unit net comprising:
deployable units, which are deployable at locations of a surface, and each being a hub or chained and comprising:
a body (110);
a telescoping mounting spike (120) that normally assumes a retracted position and selectively assumes an extended position at which the telescoping mounting spike (120) is insertable into a surface for mounting the body (110);
internal circuitry (210) configured to characterize local environmental conditions, to self-determine a status as a master or slave and to communicate with internal circuitry (210) of the other deployable units accordingly;
a power source configured to power the internal circuitry (210); and
first and second actuatable elements supported on the body (110), the first actuatable element being actuatable to cause the telescoping mounting spike (120) to assume the extended position and the second actuatable element being actuatable to activate the internal circuitry (210).

9. The deployable unit net according to claim 8, wherein each deployable unit further comprises a screen on which a user interface "UI" is displayable by the internal circuitry (210) to convey details of an operational mode of the deployable unit and the local environmental conditions; or wherein each deployable unit further comprises a photovoltaic (PV) panel attachable to the body (110) and operable as the power source..

10. The deployable unit net according to claim 8 or 9, wherein the power source of each deployable unit further comprises a battery and each of the deployable units further comprises a charging port by which the battery is chargeable.

11. The deployable unit net according to any of claims 8 to 10, wherein each deployable unit further comprises a mounting element by which the body (110) is mountable to an extra-vehicular activity "EVA" suit.

12. The deployable unit net according to any of claims 8 to 11, wherein the internal circuitry (210) of each deployable unit characterizes the local environmental conditions by extrapolating weather and radiation patterns.

13. The deployable unit net according to any of claims 8 to 12, wherein the internal circuitry (210) of each deployable unit comprises:
a field programmable gate array "FPGA"; and
sensors configured to collect data for characterizing the local environmental conditions.

14. The deployable unit net according to claim 13, wherein the sensors comprise a humidity sensor, a temperature sensor, a dosimeter and a single event upset (SEU) monitor, or wherein:
the internal circuitry (210) further comprises master/slave units disposed in signal communication with the FPGA, and
the master/slave units are communicative with master/slave units of other deployable units to determine whether the deployable unit is a hub or chained and to receive/transmit data accordingly.

15. A method operating a net of deployable units of a stay connected "STAY-C" environmental characterization system, each deployable unit comprising internal circuitry (210) configured to characterize local environmental conditions, to self-determine a status as a master or slave and to communicate with internal circuitry (210) of the other deployable units accordingly, the method comprising:
deploying the deployable units at locations of a surface, each deployable unit being a hub or chained;
executing a system integrity check for each of the deployable units;
initiating a sleep mode of each of the deployable units;
waking each of the deployable units whereupon the internal circuitry (210) self-determines a status as a master or a slave;
engaging the internal circuitry (210) of each deployable unit to characterize the local environmental conditions; and
receiving/transmitting data of the local environmental conditions according to the master or the slave status; and optionally wherein the internal circuitry (210) of each deployable unit characterizes the local environmental conditions by extrapolating weather and radiation patterns.
